# EUROPEAN PATENT SPECIFICATION

(11) **EP 3 979 380 B1**
(45) Date of publication and mention of the grant of the patent: **27.03.2024**
(21) Application number: 21185801.4
(22) Date of filing: 15.07.2021
(51) Int. Cl.: H01M 10/04

(54) **BATTERY MODULE**
BATTERIEMODUL
MODULE DE BATTERIE

(30) Priority: 05.10.2020 KR 20200127973
(43) Date of publication of application: 06.04.2022
(73) Proprietor: HYUNDAI MOTOR COMPANY, Seoul 06797 (KR); Kia Corporation, Seocho-gu Seoul 06797 (KR)
(72) Inventor: CHOI, Yong Hwan, 18280 Hwaseong-si, Gyeonggi-do (KR); OH, Yu Ri, 18280 Hwaseong-si, Gyeonggi-do (KR); SHIN, Gyung Hoon, 18280 Hwaseong-si, Gyeonggi-do (KR); LIM, Hae Kyu, 18280 Hwaseong-si, Gyeonggi-do (KR); JUNG, Ji Woong, 18280 Hwaseong-si, Gyeonggi-do (KR)
(74) Representative: Viering, Jentschura & Partner mbB Patent- und Rechtsanwälte

(56) References cited:
- EP-A1- 2 339 664
- EP-A1- 2 381 507
- EP-A1- 3 367 462
- EP-A1- 3 660 975
- WO-A1-2019/235173
- CN-A- 109 860 466
- JP-A- 2010 040 295
- JP-A- 2017 162 703

## Description

### FIELD

The present disclosure relates to a battery module including a stacked structure in which a plurality of battery cells is stacked.

### BACKGROUND

The statements in this section merely provide background information related to the present disclosure and may not constitute prior art.

Recently, in accordance with the global trend of reducing carbon dioxide emissions, there has been increasing demand for electric vehicles that generate driving power by driving a motor using electric energy stored in an energy storage device such as a battery instead of a typical internal combustion engine vehicle that generates driving power through combustion of fossil fuels.

The performance of electric vehicles is highly dependent upon the capacity and performance of the battery corresponding to an energy storage device that stores electrical energy provided to a driving motor.

A battery for a vehicle for storing electrical energy supplied to a motor in order to generate driving power of the vehicle needs to have excellent electrical properties, such as excellent charge and discharge performance and long use lifespan, and to also ensure performance at a high level in terms of a mechanical aspect, which is robust to a severe driving environment, such as high temperature and high vibration.

We have discovered that it is advantageous for manufacturers of vehicles to use a module type battery with a standardized size and capacity so as to be consistently applied to various types of vehicles.

Exemplary battery modules are described in EP 2 339 664 A1, EP 2 381 507 A1, CN 109 860 466 A, and JP 2017 162703 A.

The contents described as the related art have been provided only to assist in understanding the background of the present disclosure and should not be considered as corresponding to the related art known to those having ordinary skill in the art.

### SUMMARY

The present disclosure provides a battery module having a standardized size and capacity to be consistently applied to various types of vehicles.

In particular, the present disclosure provides a battery module for maintaining the durability of a cell by applying a uniform pressure to a battery cell stacked structure while preventing a battery cell module from being damaged when swelling of a battery cell occurs.

According to the present invention, a battery module according to claim 1 is provided. Further embodiments are defined in the dependent claims.

The battery module may further include a first cover for covering the stacked structure of the plurality of battery cells in a third direction perpendicular to the first direction and the second direction, wherein the first clamp may be bonded to the first cover.

The opposite ends of the first clamp may be bent to face the pair of end plates and respectively come into contact with outer surfaces of the pair of end plates.

In one form, each of the opposite ends of the first clamp, which are bent to face the end plates, may include: a bonding surface bonded to a corresponding outer surface among the outer surfaces of the pair of end plates, and an extension that extends from opposite ends of the bonding surface in the second direction and is positioned closer to the stacked structure in the first direction than the bonding surface. In particular, the bonding surface may come into a contact with the corresponding outer surface of the pair of end plates and the extension is positioned inside the pair of end plates.

The opposite ends of the second clamp may be bent to face the pair of end plates and are bonded to outer surfaces of the pair of end plates.

In another form, each of the opposite ends of the first clamp, which are bent to face the end plates, may include: a bonding surface bonded to a corresponding outer surface among the outer surfaces of the pair of end plates, and an extension that extends from opposite ends of the bonding surface in the second direction and is positioned closer to the stacked structure in the first direction than the bonding surface. In particular, the bonding surface may come into a contact with the corresponding outer surface of the pair of end plates and the extension is positioned inside the pair of end plates.

The end plate may include a convex portion extending from a fixed point to which the bolt is coupled to a fixed point to which the first clamp or the second clamp is coupled.

The battery module may further include a pair of bus bar assemblies arranged at opposite ends of the stacked structure in the second direction and for connecting the electrodes of the plurality of battery cells located at opposite ends in the second direction to each other, and second and third covers for covering the stacked structure in the second direction at an outside of the pair of bus bar assemblies, respectively.

The stacked structure may include a plurality of cell assemblies including a pair of battery cells stacked across a surface pressure pad interposed therebetween, and the plurality of cell assemblies may be stacked in the first direction.

In the cell assembly, the battery cells may be stacked to position respective electrodes having the same polarity adjacent to each other.

The cell assemblies in the stacked structure may be stacked on one another to arrange respective electrodes having different polarities adjacent to each other.

The plurality of cell assemblies may be stacked on one another by interposing hot melt therebetween.

Each of the pair of end plates may include an internal plate that surface-contacts the stacked structure and is formed of an insulation material and an external plate that covers the internal plate at an outside of the internal plate and has higher rigidity than the internal plate.

The external plate may include an insert space that is formed at an end adjacent to the first cover and into which a temperature sensor spaced apart from the stacked structure at a predetermined interval is inserted.

The bus bar assembly may include a bus bar including a plurality of slits, and regions of the electrodes of the plurality of battery cells, which are positioned through the slits, may be bent and are connected to the bus bar.

The bus bar assemblies may include a circuit for detecting a voltage of the battery cell.

Further areas of applicability will become apparent from the description provided herein. It should be understood that the description and specific examples are intended for purposes of illustration only and are not intended to limit the scope of the present disclosure.

### DRAWINGS

In order that the disclosure may be well understood, there will now be described various forms thereof, given by way of example, reference being made to the accompanying drawings, in which:
FIG. 1 is a perspective view of a battery module viewed from above according to one form of the present disclosure;
FIG. 2 is a perspective view of the battery module shown in FIG. 1 viewed from below;
FIG. 3 is an exploded perspective view of the battery module shown in FIG. 1;
FIG. 4 is a perspective view showing the configuration of a cell assembly in a battery module in one form of the present disclosure;
FIG. 5 is a perspective view showing the configuration of a stack structure of battery cells of a battery module according to another form of the present disclosure;
FIG. 6 is a perspective view showing a positional relationship between a stacked structure of battery modules and end plates according to one form of the present disclosure;
FIG. 7 is an enlarged plan view of an outer surface and an inner surface of the end plate shown in FIG. 6;
FIG. 8 is a more detailed cross-sectional view showing an insert space formed on the external plate shown in FIG. 7;
FIG. 9 is a perspective view showing a positional relationship between a stacked structure of battery modules and bus bar assemblies according to another form of the present disclosure;
FIG. 10 is a more enlarged plan view of a bus bar assembly applied to a battery module according to one form of the present disclosure;
FIG. 11 is a plan view showing the state in which a bus bar of the bus bar assembly shown in FIG. 10 and electrodes of battery cells in a stacked structure are bonded to each other;
FIG. 12 is a perspective view showing a positional relationship of a cover, a first clamp, a second clamp, and a stacked structure of a battery module according to one form of the present disclosure;
FIG. 13 is a perspective view showing a positional relationship of a second cover, a third cover, and a stacked structure of a battery module according to one form of the present disclosure;
FIG. 14 is a detailed diagram showing a structure in which a second cover and a third cover are assembled with each other in a battery module according to one form of the present disclosure;
FIG. 15 is a perspective view showing an instrumental structure for providing a pressure to maintain a stacked structure in an appropriate form in a battery module according to one form of the present disclosure;
FIG. 16 is a plan view of FIG. 15 viewed in the second direction; and
FIG. 17 is a partial perspective view showing a structure in which a first clamp and a second clamp are bonded to an end plate in a battery module according to one form of the present disclosure.

The drawings described herein are for illustration purposes only and are not intended to limit the scope of the present disclosure in any way.

### DETAILED DESCRIPTION

The following description is merely exemplary in nature and is not intended to limit the present disclosure, application, or uses. It should be understood that throughout the drawings, corresponding reference numerals indicate like or corresponding parts and features.

Hereinafter, a battery module according to exemplary forms of the present disclosure will be described in detail with reference to the attached drawings.

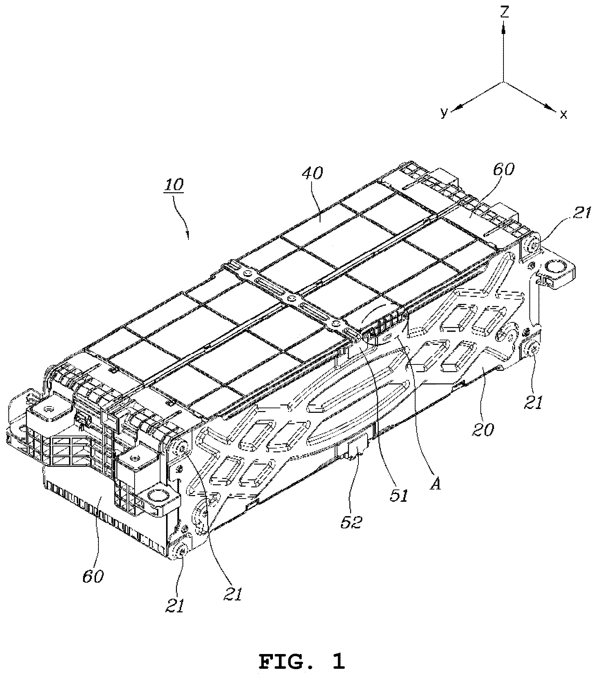

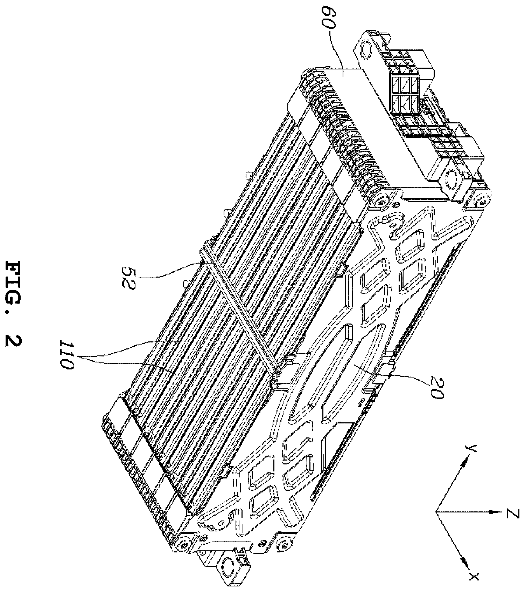

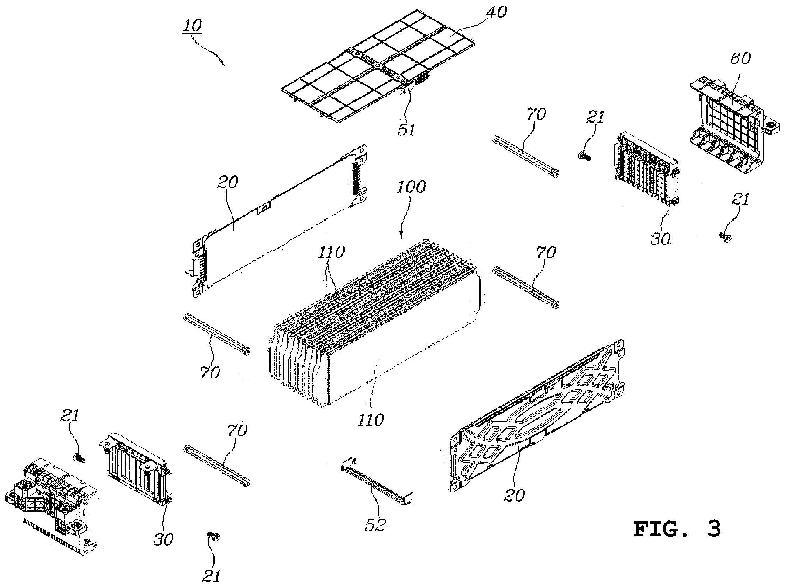

FIG. 1 is a perspective view of a battery module viewed from above according to an exemplary form of the present disclosure. FIG. 2 is a perspective view of the battery module shown in FIG. 1 viewed from below. FIG. 3 is an exploded perspective view of the battery module shown in FIG. 1.

Referring to FIGs. 1 to 3, the battery module 10 may include a plurality of battery cells 110 stacked on one another in a first direction (an x-axis direction), a pair of end plates 20 that are respectively surface-bonded to opposite ends in the first direction of a stacked structure 100 of the plurality of battery cells 110, a pair of bus bar assemblies 30 that are arranged at opposite ends in a second direction (a y-axis direction) perpendicular to the first direction of the stacked structure 100 of the battery cells 110 and that connect electrodes of the plurality of battery cells 110 to each other, a first cover 40 that covers one surface of the stacked structure 100 of the plurality of battery cells 110 in a third direction (a z-axis direction) perpendicular to the first direction and the second direction, a first clamp 51 having opposite ends that are respectively bonded to the pair of end plates 20 across the first cover 40 at the outside of the first cover 40, and a second clamp 52 having opposite ends that are respectively bonded to the two end plates 20 across a surface of the stacked structure 100 of the plurality of battery cells 110, which faces the surface on which the first cover 40 is disposed.

In another form of the present disclosure, the battery module may include second and third covers 60 that cover the stacked structure 100 of the battery cells 110 in the second direction at the outside of the bus bar assemblies 30, respectively.

The battery module may include bolts 21 and long nuts 70 as coupling devices for instrumental coupling between components.

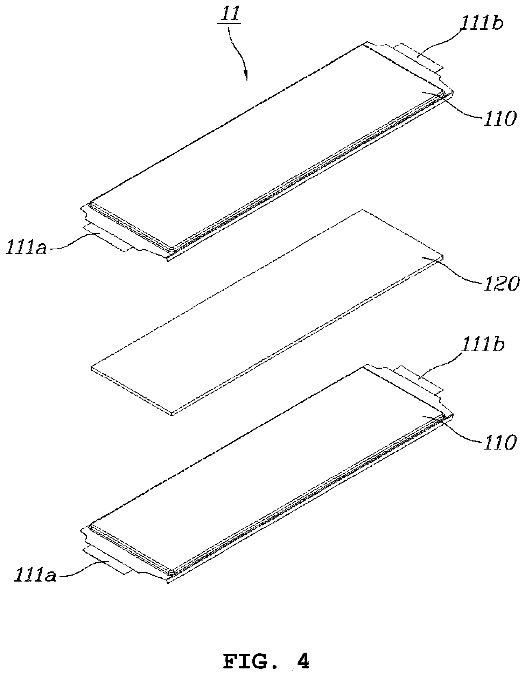

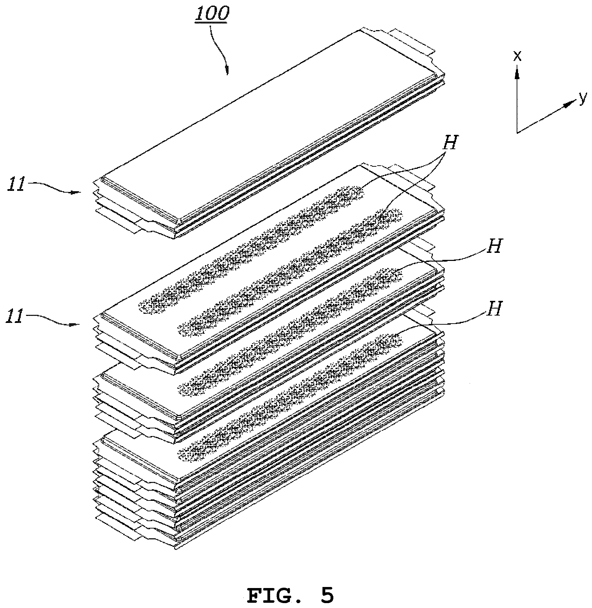

FIG. 4 is a perspective view showing the configuration of a cell assembly in a battery module according to one form of the present disclosure. FIG. 5 is a perspective view showing the configuration of a stack structure of battery cells of a battery module according to another form of the present disclosure.

As shown in FIG. 4, the stacked structure of the plurality of battery cells 110 may include a cell assembly 11 including the two battery cells 110 and a surface pressure pad 120 interposed therebetween by stacking one battery cell 110, the surface pressure pad 120, and another battery cell 110 on one another. That is, as shown in FIG. 5, the stacked structure 100 may be manufactured by stacking the plurality of cell assemblies 11 shown in FIG. 4.

In one cell assembly 11 of a battery, the battery cells 110 may be arranged to position respective electrodes having the same polarity (e.g., positive electrodes 111a or negative electrodes 111b) adjacent to each other.

The surface pressure pad 120 may be an element for preventing the structure of the module from being deformed by providing flexibility when swelling of the battery cells 110 occurs.

The plurality of cell assemblies 11 may be stacked on one another by interposing hot melt H therebetween. The hot melt H may be a kind of liquid binder for achieving adhesion when applied with heat, and may be coated in a preset pattern on a surface of the battery cell 110 before the plurality of cell assemblies 11 is stacked on one another, and in this regard, the desired positional relationship between the battery cells may be achieved by aligning the battery cells and applying heat at one time after stacking the cell assemblies 11.

The cell assemblies 11 in the stacked structure may be stacked on one another to arrange respective electrodes having different polarities adjacent to each other in order to achieve an electrical connection relationship in series between cell assemblies when the electrodes of the battery cells and bus bars of the bus bar assemblies 30, which will be described below, are connected to each other. That is, the battery cells in the cell assembly 11 may be electrically connected in series, and the cell assemblies 11 may be electrically connected in series.

Hereinafter, for convenience of description, a direction in which the battery cells 110 are stacked will be referred to as a first direction (an x-axis direction) and a direction perpendicular to the first direction, in which the electrodes of the battery cell 110 are connected to each other, will be referred to as a second direction (a y-axis direction). In addition, a direction perpendicular to the first direction and the second direction, that is, a direction in which sides on which electrodes of the battery cells 110 are not formed are connected to each other will be referred to as a third direction (a z-axis direction).

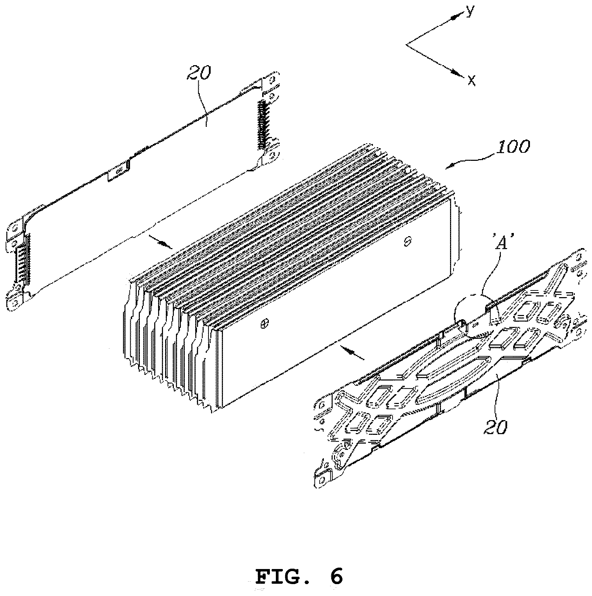

FIG. 6 is a perspective view showing a positional relationship between a stacked structure of battery modules and end plates according to one form of the present disclosure.

As shown in FIG. 6, the pair of end plates 20 may be arranged to surface-contact surfaces at opposite ends of the stacked structure 100 in the first direction as a stack direction of the stacked structure 100 of the battery cells, that is, exposed surfaces of the outermost battery cells among the plurality of battery cells 110 included in the stacked structure 100.

The pair of end plates 20 may be an element for maintaining an interval therebetween to prevent the battery module from being deformed and to uniformly maintain surface pressure between the stacked battery cells 110 due to the rigidity of the end plates 20 itself when swelling of the battery cells 110 occurs. Thus, the end plates 20 may also include an additional device that has sufficient rigidity to prevent the battery module from being deformed while maintaining surface-contact with the battery cells 110 and achieves the uniformity of surface pressure.

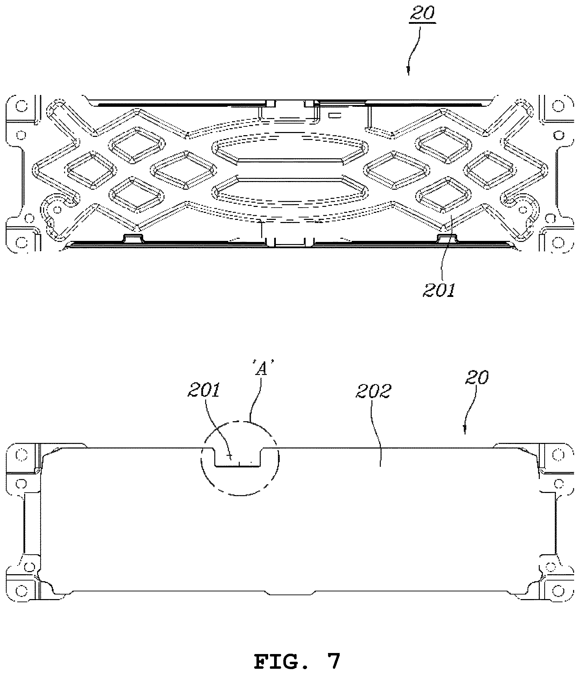

FIG. 7 is an enlarged plan view of an outer surface and an inner surface of the end plate shown in FIG. 6.

As shown in FIG. 7, each end plate 20 may include an external plate 201 exposed outside the battery module 10 and an internal plate 202 that is covered by the external plate 201 and surface-contacts the stacked structure 100 of the battery. The external plate 201 may be formed of a metallic material to be lightweight while ensuring sufficient rigidity, and the internal plate 202 may be formed of an insulation material such as plastic, which has degraded rigidity compared with the external plate 201 but ensures electric insulation when surface-contacting the outermost battery cells 110 of the stacked structure 100.

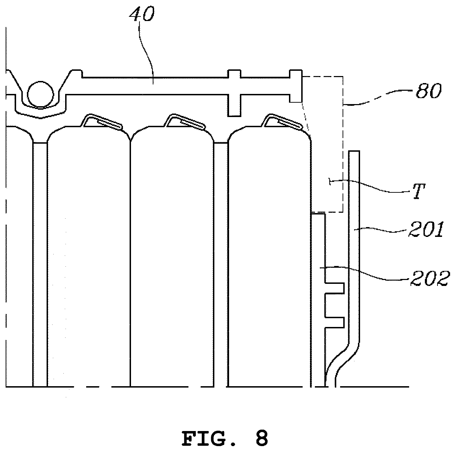

FIG. 8 is a more detailed cross-sectional view showing an insert space formed on the external plate shown in FIG. 7.

According to another form, an insert space T into which a temperature sensor 80 spaced apart from the stacked structure 100 at a predetermined interval is inserted may be formed at a side positioned in the second direction of the external plate 201 of the end plate 20 using various metal molding technologies. A region in which the insert space T is formed may correspond to a portion 'A' shown in FIGs. 1, 6, and 7, and FIG. 8 is a cross-sectional view showing the portion 'A' taken along the first direction.

One battery pack may be embodied by arranging the plurality of battery modules 10 in a case designed according to a vehicle type. In general, it is important to recognize an internal temperature in order to manage a battery pack and a battery module is manufactured to have a temperature sensor installed therein. The battery module according to one form of the present disclosure may provide the space T for installing a temperature sensor therein after a plurality of battery modules is arranged in a case rather than having a temperature sensor in the module itself.

In particular, the battery module 10 according to one form of the present disclosure may not include a separate covering element on an opposite surface to a surface on which the first cover 40 is installed, a battery cell is exposed out of the opposite surface, and the surface through which the battery cells is exposed may be arranged to face a bottom surface of the case. Accordingly, the insert space T of the temperature sensor may be formed to ensure a predetermined space between the stacked structure of the battery cells and the external plate 201 at an end of the external plate 201 adjacent to the first cover 40.

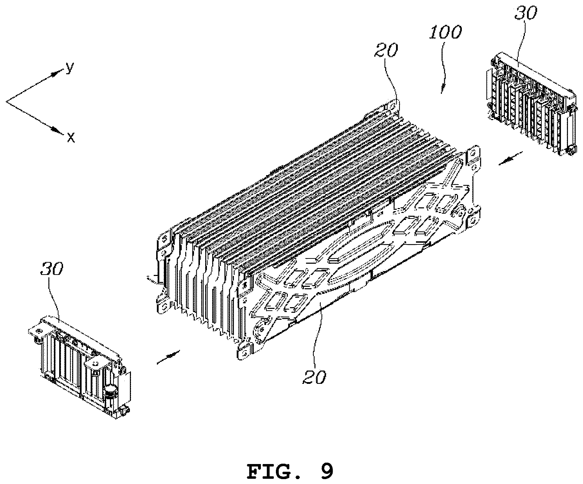

FIG. 9 is a perspective view showing a positional relationship between a stacked structure of battery modules and bus bar assemblies according to one form of the present disclosure.

As shown in FIG. 9, the bus bar assemblies 30 may be installed at opposite ends in the second direction perpendicular to a direction in which the stacked structure 100 of battery cells is stacked, that is, in a direction in which the electrodes 111a and 111b of the battery cell 110 are connected to each other.

The bus bar assembly 30 may be an electrode including a bus bar for forming electrical connection between the electrodes 111a and 111b of the battery cells 110 in the stacked structure 100.

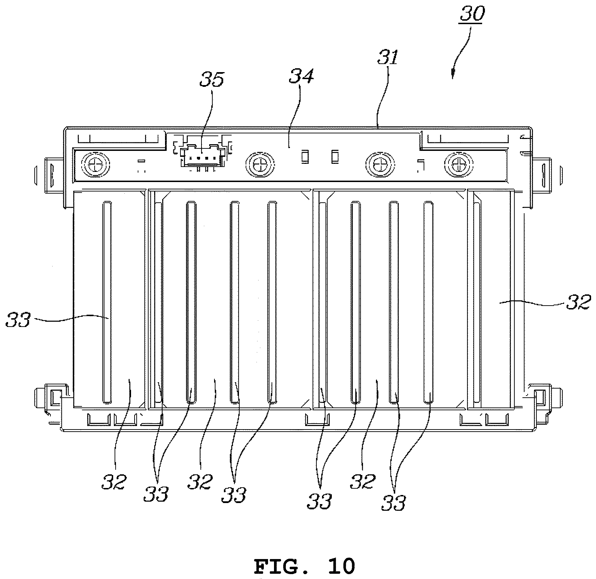

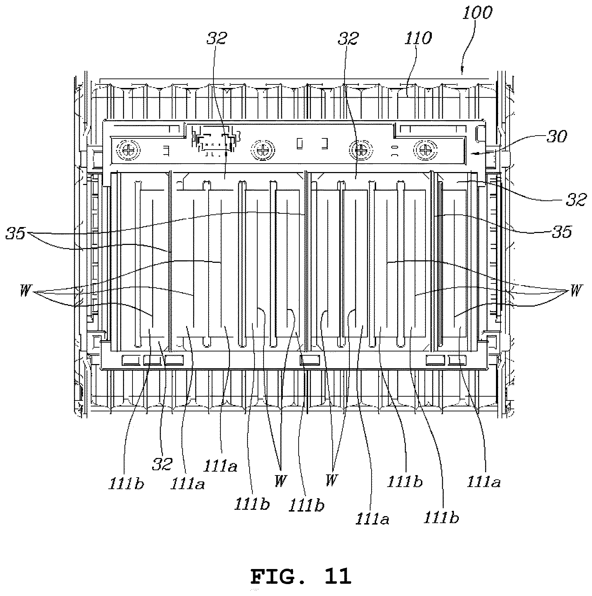

FIG. 10 is a more enlarged plan view of a bus bar assembly applied to a battery module according to another form of the present disclosure. FIG. 11 is a plan view showing the state in which a bus bar of the bus bar assembly shown in FIG. 10 and electrodes of battery cells in a stacked structure are bonded to each other.

As shown in FIG. 10, the bus bar assembly 30 may include a frame 31 formed of an insulation material such as plastic, and a bus bar 32 attached to the frame 31 and having slits 33 into which the electrodes 111a and 111b of the battery cells 110 are to be inserted. An interval between the slits 33 may correspond to an interval between the electrodes 111a and 111b of the battery cells 110 positioned in the stacked structure 100. The frame 31 may include a partition 35 formed between bus bars that need to be electrically insulated from each other.

The bus bar assembly 30 may include a circuit 34 for monitoring a voltage of the battery cell 110 included in the battery module. Here, the circuit 34 may include a circuit board such as a PCB, an electric device installed thereon, and the like.

As shown in FIG. 11, when the electrodes 111a and 111b of the battery cells 110 are inserted into the slits 33 formed in the bus bar 32 of the bus bar assembly 30, an entirety of the electrodes 111a and 111b of the battery cells 110 may be bent at one time and may come into contact with the bus bar 32, and then, the bus bar 32 and the electrodes 111a and 111b of the battery cells 110 may be bonded to each other through a single welding operation. In FIG. 11, reference numeral 'W' indicates a region which is irradiated with welding energy for welding.

In the case of a conventional battery module, electrical connection of a stacked structure of battery cells may be achieved by bending electrodes of a unit battery cell in advance and performing primary welding and then stacking the plurality of unit battery cells and performing secondary welding gain. Such a conventional method has a problem in that a plurality of bending and welding processes is performed and it is difficult to ensure uniformity thereof, thus causing a step difference at a welding target during secondary welding.

However, as shown in FIG. 9, according to exemplary forms of the present disclosure, overall electrical connection between the battery cells in the battery module may be achieved through a single bending process and a single welding process by applying the bus bar assemblies 30, thereby simplifying a manufacturing process and improving product quality.

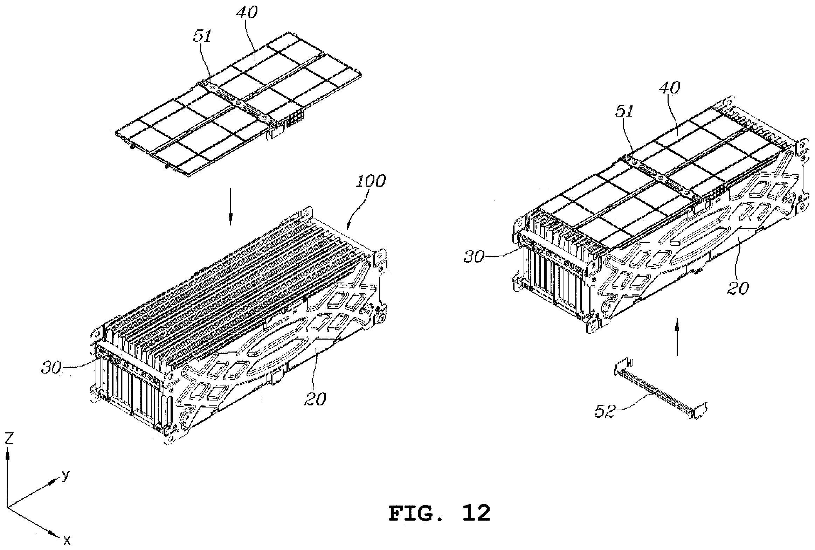

FIG. 12 is a perspective view showing a positional relationship of a cover, a first clamp, a second clamp, and a stacked structure of a battery module according to one form of the present disclosure.

As shown in FIG. 12, the first cover 40 may be disposed at one end of the stacked structure 100 in the third direction of the stacked structure 100 of battery cells.

The first clamp 51 configured in the form of a bar extending in the first direction may be disposed across the stacked structure 100 outside the first cover 40, and opposite ends of the first clamp 51 may be bonded to the pair of end plates 20, respectively.

The second clamp 52 configured in a bar extending in the first direction may be disposed adjacent to one surface facing the other surface of the stacked structure 100, on which the first cover 40 is disposed, across the stacked structure 100, and opposite ends of the second clamp 52 may be bonded to the pair of end plates 20, respectively.

The first clamp 51 may be fixed to the first cover 40 using a method such as thermal fusion, and the opposite ends of the first clamp 51 may be bonded to the two end plates 20, respectively, and thus a distance between the end plates 20 may also be maintained when swelling of the battery cells 110 occurs. The second clamp 52 may be spaced apart from the exposed surface of the stacked structure 100 (which is a lower surface in the drawing) adjacent thereto and may also maintain a distance between the two end plates 20 when swelling of the battery cells occurs, like the first clamp 51.

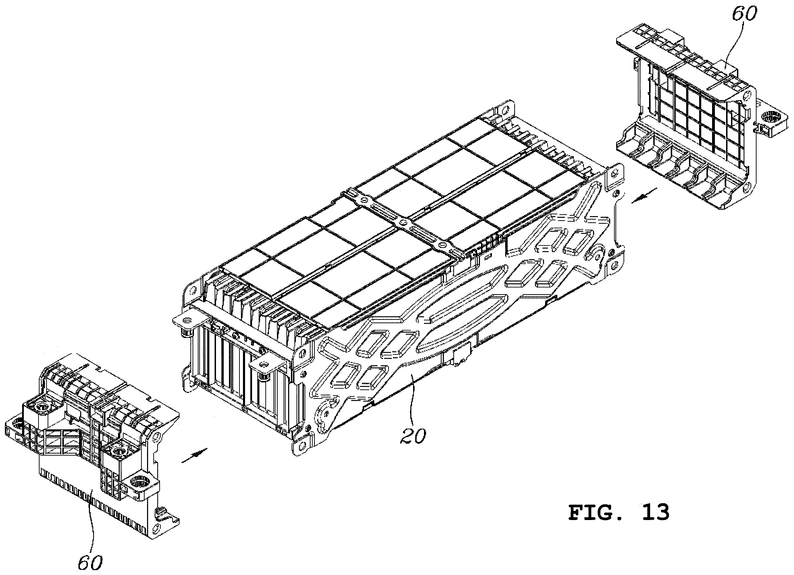

FIG. 13 is a perspective view showing a positional relationship of a second cover, a third cover, and a stacked structure of a battery module according to one form of the present disclosure.

As shown in FIG. 13, the second and third covers 60 may be arranged at opposite ends of the stacked structure 100 in the second direction perpendicular to a direction in which the stacked structure 100 of battery cells is stacked, that is, in a direction in which the electrodes 111a and 111b of the battery cell 110 are connected to each other. Here, the second and third covers 60 are substantially the same components that are installed at symmetrical positions of the battery module 10, and thus may be denoted by the same reference numeral.

The battery module 10 may be lastly completed by installing the second and third covers 60 to cover the bus bar assemblies 30. The second and third covers 60 may include through holes for exposing elements therethrough (e.g., a portion of a bus bar that needs to be exposed for external electrical connection or a connector for providing information on detection of a cell voltage) which need to be exposed out of the battery module among elements included in the bus bar assemblies 30.

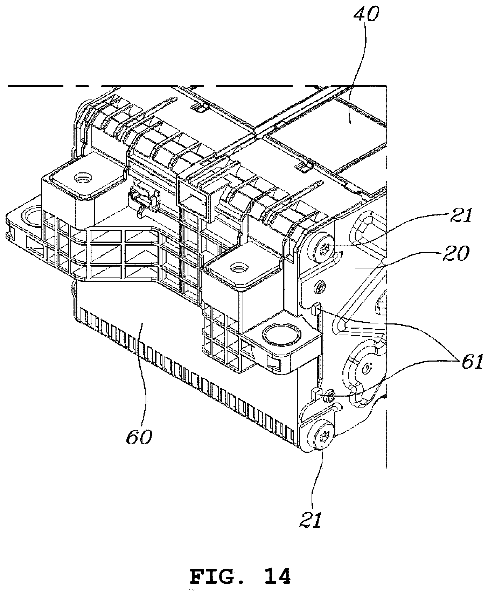

FIG. 14 is a detailed diagram showing a structure in which a second cover and a third cover are assembled with each other in a battery module according to one form of the present disclosure.

As shown in FIG. 14, a lateral portion of the second and third covers 60 may come into contact with the end plate 20. The end plate 20 and the lateral portion of the second and third covers 60 may be coupled to each other by the bolts 21.

Although not clearly shown in FIGs. 13 and 14, the long nuts 70 extending in the first direction may be disposed inside the second and third covers 60. The two end plates 20 may be fixed to the lateral surfaces (surfaces parallel to the first direction) of the second and third covers 60 by coupling the bolts 21 to the opposite ends of one long nut 70 disposed inside the second and third cover 60.

Protrusions 61 protruding in the first direction may be formed on the lateral portion of the second and third covers 60, and an edge of the end plate 20 may be caught by the protrusions 61 to achieve assembly therebetween.

In the battery module 10 according to another form of the present disclosure, the battery module may be inhibited or prevented from being damaged while providing appropriate surface pressure even if swelling of the battery cells 110 occurs by disposing the end plates 20 having rigidity on the opposite surfaces of the stacked structure 100 in a stack direction of the stacked structure 100 having the battery cells 110 stacked in the first direction and maintaining a constant interval between the two end plates 20.

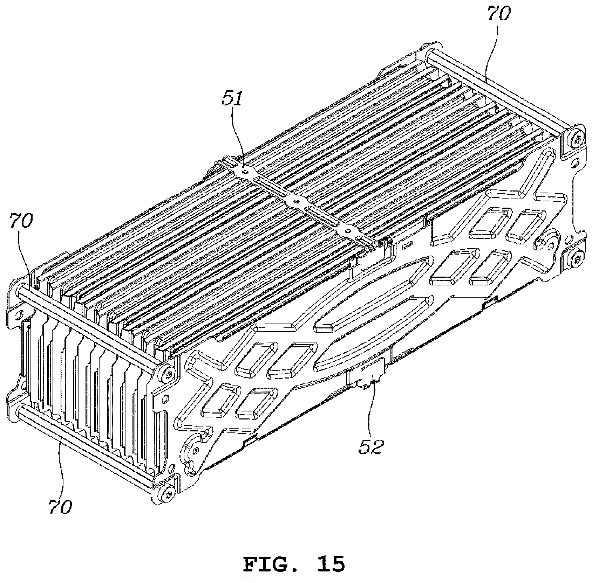

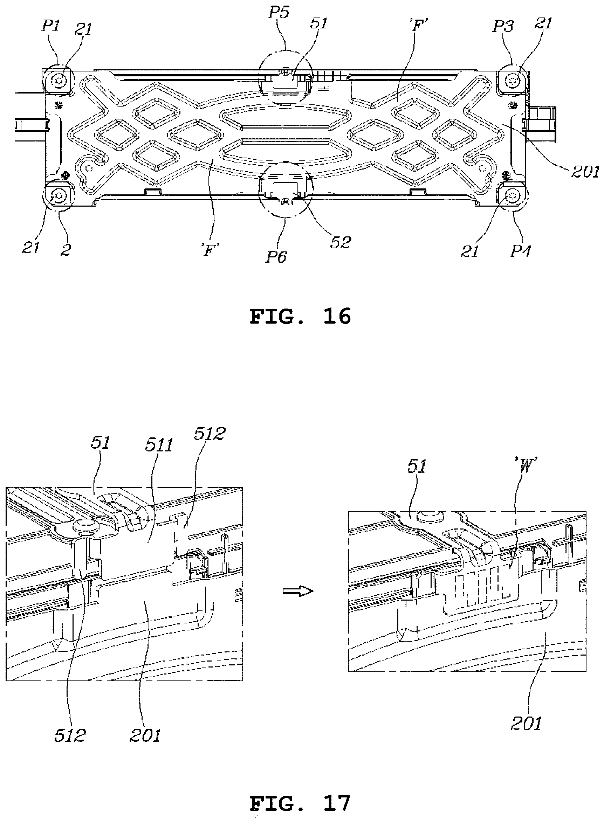

FIG. 15 is a perspective view showing an instrumental structure for providing a pressure to maintain a stacked structure in an appropriate form in a battery module according to an exemplary form of the present disclosure. FIG. 16 is a plan view of FIG. 15 viewed in the second direction.

Referring to FIGs. 15 and 16, the end plates 20 that surface-contact the outermost battery cells 110 of the stacked structure at opposite ends in a stack direction of the stacked structure 100 of the battery cells 110, the first clamp 51 and the second clamp 52 that fix the interval between the end plates 20, the long nuts 70 disposed between the two end plates 20, and the bolts coupled to the long nuts 70 may fixedly maintain the interval between the end plates 20 while maintaining appropriate surface pressure in the stacked structure even if cell swelling occurs.

As described above, the first clamp 51 and the second clamp 52 may prevent the stacked structure 100 disposed between the end plates from expanding at the center of the opposite surfaces of the end plates 20 in the second direction.

In addition, the end plates may be prevented from expanding at the opposite ends of the end plate 20 in the second direction by coupling the bolts 21 at the opposite ends of the long nuts 70 by interposing the long nuts 70 at a position adjacent to corners of the end plate 20.

That is, four points P1 to P4 adjacent to four corners of the end plate 20 and two points P5 and P6 at a central portion of a side of the end plate 20 in the second direction may be fixed points for maintaining a constant interval between the two end plates 20.

In order to provide a load path based on the aforementioned fixed points, a foaming structure having connectivity between the fixed points, that is, a convex portion F may be formed in the external plate 201 of the end plate 20. Although the convex portion F may have various patterns, the convex portion F may extend from the fixed point adjacent to one corner of the external plate 201 toward the fixed point at the center of a long side in the second direction, at which the corresponding corner is formed, as shown in FIG. 16.

That is, the convex portion F may be formed to extend from the first fixed point P1 toward the fixed point P6 at the center of the lower surface of the external plate 201 based on the drawing, and the convex portion F may be formed to extend from the second fixed point P2 toward the fixed point P5 at the center of the upper surface of the external plate 201 based on the drawing. Similarly, the convex portion F may be formed to extend from the third fixed point P3 toward the fixed point P6 at the center of the lower surface of the external plate 201 based on the drawing, and the convex portion F may be formed to extend from the fourth fixed point P4 toward the fixed point P5 at the center of the upper surface of the external plate 201 based on the drawing.

FIG. 17 is a partial perspective view showing a structure in which a first clamp and a second clamp are bonded to an end plate in a battery module according to one form of the present disclosure.

As shown in FIG. 17, an end of the first clamp 51 may be configured like a hook bent in a direction toward the end plate 20. In more detail, the bent end of the first clamp 51 may include a bonding surface 511 bonded to the end plate 20 and an extension 512 that extends from opposite ends of the bonding surface 511 in the second direction and is positioned closer to the stacked structure in the first direction than the bonding surface 511. The bonding surface 511 may come into contact with the outside of a region adjacent to the side of the external plate 201 of the end plate 20, and the extension 512 may be positioned inside the region adjacent to the side.

Thus, the bonding surface 511 may prevent the end plate 20 from expanding outward when swelling of the battery cells occurs, and the extension 512 may prevent the center of the end plate 20 in the second direction from being bent inside the module.

The bonding surface 511 may be bonded to an outer surface of the external plate 201 using a welding method by applying energy for welding such as a laser to a surface of the bonding surface 511 ('W': welding region). However, any other bonding methods that are known in the art and replace welding may be applied. In addition, the bonding structure shown in FIG. 17 may also be applied to the second clamp 52 in the same way.

As described above, in the battery module according to the various forms of the present disclosure, the clamps may be welded to opposite end plates in a stack direction of the battery cells at the center of the battery module and the two end plates may be coupled to each other by the long nuts and the bolts at regions corresponding to corners of the end plates, and accordingly, the battery cells may be prevented from being damaged and the durability thereof may be ensured by applying an appropriate pressure to the stacked structure of the battery cells while being maintained in a predetermined shape to prevent the battery cells from being damaged even if swelling of the battery cells occurs.

In the battery module according to the various forms of the present disclosure, the electrical connection between electrodes may be achieved through a single bending process and a single welding process by applying the bus bar assemblies, and accordingly, a manufacturing process may be simplified and a result deviation between battery cells may be removed, thereby improving product quality.

In the battery module according to the various forms of the present disclosure, battery cells included in a battery pack may be manufactured in the form of a module, and thus, even if specifications of the battery pack are changed depending on a vehicle type, a standardized battery cell may be applied to battery packs of various specifications, and accordingly, a separate design process for arranging the battery cells in the battery pack may be omitted, thereby reducing a development period and development cost.

As described above, in the battery module according to the various forms of the present disclosure, the clamps may be welded to opposite end plates in a stack direction of the battery cells at the center of the battery module and the two end plates may be coupled to each other by the long nuts and the bolts at regions corresponding to corners of the end plates, and accordingly, the battery cells may be prevented from being damaged and the durability thereof may be ensured by applying an appropriate pressure to the stacked structure of the battery cells while being maintained in a predetermined shape to prevent the battery cells from being damaged even if swelling of the battery cells occurs.

In the battery module according to the various forms of the present disclosure, the electrical connection between electrodes may be achieved through a single bending process and a single welding process by applying the bus bar assemblies, and accordingly, a manufacturing process may be simplified and a result deviation between battery cells may be removed, thereby improving product quality.

In the battery module according to the various forms of the present disclosure, battery cells included in a battery pack may be manufactured in the form of a module, and thus, even if specifications of the battery pack are changed depending on a vehicle type, a standardized battery cell may be applied to battery packs of various specifications, and accordingly, a separate design process for arranging the battery cells in the battery pack may be omitted, thereby reducing a development period and development cost.

It will be appreciated by those skilled in the art that the effects achievable through the present disclosure are not limited to those that have been particularly described hereinabove and that other unmentioned effects of the present disclosure will be more clearly understood from the above detailed description.

Although the present disclosure has been shown and described with respect to exemplary forms, it will be apparent to those having ordinary skill in the art that the present disclosure may be variously modified and altered without departing from the scope of the present disclosure.

## Claims

1. A battery module (10) comprising:
a plurality of battery cells (110) stacked on one another in a first direction and respectively including electrodes (111a, 111b) arranged in a second direction perpendicular to the first direction;
a pair of end plates (20) that are respectively surface-bonded to opposite ends of a stacked structure of the plurality of battery cells (110) ;
a first clamp (51) including opposite ends that are respectively bonded to the pair of end plates (20) across a first surface of the stacked structure;
a second clamp (52) including opposite ends that are respectively bonded to the pair of end plates (20) across a second surface of the stacked structure which faces the first surface of the stacked structure;
a plurality of long nuts (70) extending in the first direction between regions adjacent to corners of the pair of end plates (20); and
a plurality of bolts (21) configured to respectively couple the regions adjacent to the corners of the pair of end plates (20) to ends of the plurality of long nuts (70).

2. The battery module (10) of claim 1, further comprising:
a first cover (40) for covering the stacked structure of the plurality of battery cells (110) in a third direction perpendicular to the first direction and the second direction,
wherein the first clamp (51) is bonded to the first cover (40).

3. The battery module (10) of claim 1 or 2, wherein the opposite ends of the first clamp (51) are bent to face the pair of end plates (20) and respectively come into contact with outer surfaces of the pair of end plates (20).

4. The battery module (10) of one of claims 1-3, wherein each of the opposite ends of the first clamp (51) includes:
a bonding surface (511) bonded to a corresponding outer surface among the outer surfaces of the pair of end plates (20), and
an extension (512) configured to extend from opposite ends of the bonding surface (511) in the second direction and positioned closer to the stacked structure in the first direction than the bonding surface (511), and
wherein the bonding surface (511) comes into a contact with the corresponding outer surface of the pair of end plates (20) and the extension (512) is positioned inside the pair of end plates (20).

5. The battery module (10) of one of claims 1-4, wherein the opposite ends of the second clamp (52) are bent to face the pair of end plates (20) and are bonded to outer surfaces of the pair of end plates (20) .

6. The battery module (10) of one of claims 1-5, wherein an end plate (20) of the pair of end plates (20) includes a convex portion (F) extending from a first fixed point (P1) to which a bolt (21) of the plurality of bolts (21) is coupled to a second fixed point (P2) to which the first clamp (51) or the second clamp (52) is coupled.

7. The battery module (10) of one of claims 1-6, further comprising:
a pair of bus bar assemblies (30) arranged at opposite ends of the stacked structure in the second direction and configured to connect the electrodes (111a, 111b) of the plurality of battery cells (110) located at opposite ends thereof in the second direction to each other; and
second and third covers (60) configured to cover the stacked structure in the second direction at an outside of the pair of bus bar assemblies (30), respectively.

8. The battery module (10) of one of claims 1-7, wherein the stacked structure includes a plurality of cell assemblies (11) including a pair of battery cells (110) stacked across a surface pressure pad interposed therebetween, and
wherein the plurality of cell assemblies (11) is stacked in the first direction.

9. The battery module (10) of claim 8, wherein, in each cell assembly of the plurality of cell assemblies (11), the pair of battery cells (110) are stacked to position respective electrodes (111a, 111b) having the same polarity adjacent to each other.

10. The battery module (10) of claim 8 or 9, wherein the plurality of cell assemblies (11) in the stacked structure are stacked on one another to arrange respective electrodes (111a, 111b) having different polarities adjacent to each other.

11. The battery module (10) of one of claims 1-10, wherein each end plate (20) of the pair of end plates (20) comprises:
an internal plate (202) that surface-contacts the stacked structure and is formed of an insulation material, and
an external plate (201) that covers the internal plate (202) at an outside of the internal plate (202) and has higher rigidity than a rigidity of the internal plate (202).

12. The battery module (10) of claim 11, further comprising: a first cover (40) configured to cover the stacked structure of the plurality of battery cells (110) in a third direction perpendicular to the first direction and the second direction,
wherein:
the external plate (201) includes an insert space (T) that is formed at an end adjacent to the first cover (40),
a temperature sensor (80) is inserted into the insert space (T), and
the temperature sensor (80) is spaced apart from the stacked structure at a predetermined interval.

13. The battery module (10) of one of claims 1-12 provided that in combination with claim 7, wherein:
a bus bar assembly (30) of the pair of bus bar assemblies (30) includes a bus bar (32) including a plurality of slits (33), and
regions of the electrodes (111a, 111b) of the plurality of battery cells (110), which are positioned through the plurality of slits (33), are bent and are connected to the bus bar (32).

## Patentansprüche

1. Batteriemodul (10), welches aufweist:
eine Mehrzahl von Batteriezellen (110), die in einer ersten Richtung aufeinander gestapelt sind und die jeweils Elektroden (111a, 111b) aufweisen, die in einer zweiten Richtung, welche senkrecht zur ersten Richtung ist, angeordnet sind;
ein Paar Endplatten (20), die jeweils mit entgegengesetzten Enden einer Gestapelt-Struktur der Mehrzahl von Batteriezellen (110) flächenverbunden sind;
eine erste Klemme (51), die entgegengesetzte Enden aufweist, die jeweils mit dem Paar Endplatten (20) über eine erste Fläche der Gestapelt-Struktur verbunden sind;
eine zweite Klemme (52), die entgegengesetzte Enden aufweist, die jeweils mit dem Paar Endplatten (20) über eine zweite Fläche der Gestapelt-Struktur verbunden sind, welche der ersten Fläche der Gestapelt-Struktur gegenüberliegt;
eine Mehrzahl von Langmuttern (70), die sich in der ersten Richtung zwischen Bereichen erstrecken, die angrenzend an Ecken des Paars Endplatten (20) sind; und
eine Mehrzahl von Schrauben (21), die eingerichtet sind, um die Bereiche, welche angrenzend an die Ecken des Paars Endplatten (20) sind, jeweilig mit Enden der Mehrzahl von Langmuttern (70) zu verbinden.

2. Batteriemodul (10) gemäß Anspruch 1, welches ferner aufweist:
eine erste Abdeckung (40) zum Abdecken der Gestapelt-Struktur der Mehrzahl von Batteriezellen (110) in einer dritten Richtung, welche senkrecht zu der ersten Richtung und der zweiten Richtung ist,
wobei die erste Klemme (51) mit der ersten Abdeckung (40) verbunden ist.

3. Batteriemodul (10) gemäß Anspruch 1 oder 2, wobei die entgegengesetzten Enden der ersten Klemme (51) gebogen sind, um dem Paar Endplatten (20) zugewandt zu sein und mit Außenflächen des Paars Endplatten (20) jeweilig in Kontakt zu kommen.

4. Batteriemodul (10) gemäß einem der Ansprüche 1-3, wobei jedes der entgegengesetzten Enden der ersten Klemme (51) aufweist:
eine Verbindungsfläche (511), welche mit einer korrespondierenden Außenfläche von den Außenflächen des Paares Endplatten (20) verbunden ist, und
eine Erstreckung (512), welche eingerichtet ist, um sich von entgegengesetzten Enden der Verbindungsfläche (511) in der zweiten Richtung zu erstrecken, und welche in der ersten Richtung näher an der Gestapelt-Struktur angeordnet ist als die Verbindungsfläche (511), und
wobei die Verbindungsfläche (511) mit der korrespondierenden Außenfläche des Paares Endplatten (20) in Kontakt kommt und die Erstreckung (512) innerhalb des Paares Endplatten (20) angeordnet ist.

5. Batteriemodul (10) gemäß einem der Ansprüche 1-4, wobei die entgegengesetzten Enden der zweiten Klemme (52) gebogen sind, um dem Paar Endplatten (20) zugewandt zu sein, und mit den Außenflächen des Paars Endplatten (20) verbunden sind.

6. Batteriemodul (10) gemäß einem der Ansprüche 1-5, wobei eine Endplatte (20) des Paares Endplatten (20) einen konvexen Abschnitt (F) aufweist, der sich von einem ersten Befestigt-Punkt (P1), mit dem eine Schraube (21) der Mehrzahl von Schrauben (21) gekuppelt ist, zu einem zweiten Befestigt-Punkt (P2), mit dem die erste Klemme (51) oder die zweite Klemme (52) gekuppelt ist, erstreckt.

7. Batteriemodul (10) gemäß einem der Ansprüche 1-6, welches ferner aufweist:
ein Paar Sammelschieneneinrichtungen (30), die an entgegengesetzten Enden der Gestapelt-Struktur in der zweiten Richtung angeordnet sind und die eingerichtet sind, um die Elektroden (111a, 111b) der Mehrzahl von Batteriezellen (110), die an entgegengesetzten Enden davon in der zweiten Richtung angeordnet sind, zu verbinden; und
eine zweite und eine dritte Abdeckung (60), die eingerichtet sind, um die Gestapelt-Struktur in der zweiten Richtung an einer Außenseite des Paars Sammelschieneneinrichtungen (30) abzudecken.

8. Batteriemodul (10) gemäß einem der Ansprüche 1-7, wobei die Gestapelt-Struktur eine Mehrzahl von Zelleinrichtungen (11) aufweist, die ein Paar Batteriezellen (110) aufweisen, die über ein dazwischen angeordnetes Flächendruckpad gestapelt sind, und
wobei die Mehrzahl von Zelleinrichtungen (11) in der ersten Richtung gestapelt sind.

9. Batteriemodul (10) gemäß Anspruch 8, wobei in jeder Zelleinrichtung der Mehrzahl von Zelleinrichtungen (11) das Paar Batteriezellen (110) gestapelt ist, um jeweilige Elektroden (111a, 111b), welche die gleiche Polarität haben, angrenzend aneinander anzuordnen.

10. Batteriemodul (10) gemäß Anspruch 8 oder 9, wobei die Mehrzahl von Zelleinrichtungen (11) in der Gestapelt-Struktur aufeinander gestapelt sind, um jeweilige Elektroden (111a, 111b), welche unterschiedliche Polaritäten haben, angrenzend aneinander anzuordnen.

11. Batteriemodul (10) gemäß einem der Ansprüche 1-10, wobei jede Endplatte (20) des Paares Endplatten (20) aufweist:
eine innere Platte (202), welche die Gestapelt-Struktur flächenberührt und aus einem Isolationsmaterial gebildet ist, und
eine äußere Platte (201), welche die innere Platte (202) an einer Außenseite der inneren Platte (202) abdeckt und eine höhere Steifigkeit als eine Steifigkeit der inneren Platte (202) hat.

12. Batteriemodul (10) gemäß Anspruch 11, welches ferner aufweist: eine erste Abdeckung (40), welche eingerichtet ist, um die Gestapelt-Struktur der Mehrzahl von Batteriezellen (110) in einer dritten Richtung, welche senkrecht zu der ersten Richtung und der zweiten Richtung ist, abzudecken,
wobei:
die äußere Platte (201) einen Einsetzraum (T) aufweist, der an einem Ende ausgebildet ist, welches angrenzend an die erste Abdeckung (40) ist,
ein Temperatursensor (80) in den Einsetzraum (T) eingesetzt ist, und
der Temperatursensor (80) in einem vorbestimmten Abstand im Abstand von der Gestapelt-Struktur angeordnet ist.

13. Batteriemodul (10) gemäß einem der Ansprüche 1-12 sofern in Kombination mit Anspruch 7, wobei:
eine Sammelschieneneinrichtung (30) des Paars Sammelschieneneinrichtungen (30) eine Sammelschiene (32) aufweist, welche eine Mehrzahl von Schlitzen (33) aufweist, und
Bereiche der Elektroden (111a, 111b) der Mehrzahl von Batteriezellen (110), welche durch die Mehrzahl von Schlitzen (33) angeordnet sind, gebogen sind und mit der Sammelschiene (32) verbunden sind.

## Revendications

1. Module de batterie (10), comprenant :
une pluralité de cellules de batterie (110) empilées les unes sur les autres dans une première direction et respectivement comprenant des électrodes (111a, 111b) disposées dans une deuxième direction perpendiculaire à la première direction ;
une paire de plaques d'extrémité (20) qui sont respectivement reliées en surface à des extrémités opposées d'une structure empilée de la pluralité de cellules de batterie (110) ;
une première borne (51) comprenant des extrémités opposées, qui sont respectivement reliées à la paire de plaques d'extrémité (20) à travers une première surface de la structure empilée ;
une deuxième borne (52) comprenant des extrémités opposées, qui sont respectivement reliées à la paire de plaques d'extrémité (20) à travers une deuxième surface de la structure empilée qui fait face à la première surface de la structure empilée ;
une pluralité d'écrous longs (70) s'étendant dans la première direction entre des zones adjacentes à des coins de la paire de plaques d'extrémité (20) ; et
une pluralité de vis (21) configurées pour respectivement coupler les zones adjacentes aux coins de la paire de plaques d'extrémité (20) à des extrémités de la pluralité d'écrous longs (70).

2. Module de batterie (10) selon la revendication 1, comprenant en outre :
un premier couvercle (40) pour recouvrir la structure empilée de la pluralité de cellules de batterie (110) dans une troisième direction perpendiculaire à la première direction et à la deuxième direction,
dans lequel la première borne (51) est connectée au premier couvercle (40).

3. Module de batterie (10) selon la revendication 1 ou 2, dans lequel les extrémités opposées de la première borne (51) sont pliées de manière à faire face à la paire de plaques d'extrémité (20) et entrer en contact respectivement avec des surfaces extérieures de la paire de plaques d'extrémité (20).

4. Module de batterie (10) selon l'une quelconque des revendications 1 à 3, dans lequel chacune des extrémités opposées de la première borne (51) comprend :
une surface de connexion (511) reliée à une surface extérieure correspondante parmi les surfaces extérieures de la paire de plaques d'extrémité (20), et
une extension (512) configurée pour s'étendre depuis des extrémités opposées de la surface de connexion (511) dans la deuxième direction et positionnée plus près de la structure empilée dans la première direction que la surface de connexion (511), et
dans lequel la surface de connexion (511) vient en contact avec la surface extérieure correspondante de la paire de plaques d'extrémité (20) et l'extension (512) est positionnée à l'intérieur de la paire de plaques d'extrémité (20) .

5. Module de batterie (10) selon l'une des revendications 1 à 4, dans lequel les extrémités opposées de la deuxième borne (52) sont pliées pour faire face à la paire de plaques d'extrémité (20) et sont reliées à des surfaces extérieures de la paire de plaques d'extrémité (20).

6. Module de batterie (10) selon l'une quelconque des revendications 1 à 5, dans lequel une plaque d'extrémité (20) de la paire de plaques d'extrémité (20) comprend une partie convexe (F) s'étendant d'un premier point fixé (P1) auquel est couplée une vis (21) de la pluralité de vis (21) à un deuxième point fixé (P2) auquel est couplée la première borne (51) ou la deuxième borne (52).

7. Module de batterie (10) selon l'une des revendications 1 à 6, comprenant en outre :
une paire d'ensembles de barre omnibus (30) disposés à des extrémités opposées de la structure empilée dans la deuxième direction et configurés pour connecter les électrodes (111a, 111b) de la pluralité de cellules de batterie (110) disposés à des extrémités opposées de celles-ci dans la deuxième direction ; et
un deuxième et un troisième couvercle (60) configurés pour recouvrir la structure empilée dans la deuxième direction sur un extérieur de la paire d'ensembles de barre omnibus (30), respectivement.

8. Module de batterie (10) selon l'une quelconque des revendications 1 à 7, dans lequel la structure empilée comprend une pluralité d'ensembles de cellules (11) comprenant une paire de cellules de batterie (110) empilées à travers une plaquette de pression de surface interposée entre elles ; et
dans lequel la pluralité d'ensembles de cellules (11) sont empilés dans la première direction.

9. Module de batterie (10) selon la revendication 8, dans lequel, dans chaque ensemble de cellules de la pluralité d'ensembles de cellules (11), la paire de cellules de batterie (110) est empilée pour positionner des électrodes respectives (111a, 111b) ayant la même polarité de manière adjacente les unes aux autres.

10. Module de batterie (10) selon la revendication 8 ou 9, dans lequel la pluralité d'ensembles de cellules (11) dans la structure empilée sont empilés les uns sur les autres pour disposer des électrodes respectives (111a, 111b) ayant des polarités différentes de manière adjacente les unes aux autres.

11. Module de batterie (10) selon l'une des revendications 1 à 10, dans lequel chaque plaque d'extrémité (20) de la paire de plaques d'extrémité (20) comprend :
une plaque intérieure (202) qui est en contact de surface avec la structure empilée et est formée d'un matériau d'isolation, et
une plaque extérieure (201) qui recouvre la plaque intérieure (202) sur un extérieur de la plaque intérieure (202) et présente une rigidité supérieure à une rigidité de la plaque intérieure (202).

12. Module de batterie (10) selon la revendication 11, comprenant en outre : un premier couvercle (40) configuré pour recouvrir la structure empilée de la pluralité de cellules de batterie (110) dans une troisième direction perpendiculaire à la première direction et à la deuxième direction,
dans lequel :
la plaque extérieure (201) comprend un espace d'insertion (T) qui est formé à une extrémité adjacente au premier couvercle (40),
un capteur de température (80) est inséré dans l'espace d'insertion (T), et
le capteur de température (80) est espacé de la structure empilée à une distance prédéterminée.

13. Module de batterie (10) selon l'une des revendications 1 à 12, à condition qu'en combinaison avec la revendication 7, dans lequel :
un ensemble de barre omnibus (30) de la paire d'ensembles de barre omnibus (30) comprend une barre omnibus (32) comprenant une pluralité de fentes (33), et
des zones des électrodes (111a, 111b) de la pluralité de cellules de batterie (110) qui sont positionnées à travers la pluralité de fentes (33) sont courbées et connectées à la barre omnibus (32).
